# EUROPEAN PATENT SPECIFICATION

(11) **EP 0 496 258 B1**
(45) Date of publication and mention of the grant of the patent: **20.06.2001**
(21) Application number: 92100562.5
(22) Date of filing: 15.01.1992
(51) Int. Cl.: C08L 69/00, C08L 25/00, C08L 23/00, C08L 21/00, C08L 77/00, C08G 64/14

(54) **Polymer composition containing a branched polycarbonate**
Polymermischung, die ein verzweigtes Polycarbonat enthält
Composition de polymères contenant un polycarbonate ramifié

(30) Priority: 24.01.1991 JP 2266091; 24.01.1991 JP 2266191; 24.01.1991 JP 2266291; 24.01.1991 JP 2266391
(43) Date of publication of application: 29.07.1992
(73) Proprietor: IDEMITSU PETROCHEMICAL CO., LTD., Minato-ku, Tokyo (JP)
(72) Inventor: Kozakura, Shiro, Idemitsu Petrochemical Co.,Ltd., Ichihara-shi, Chiba-ken (JP); Kuze, Shigeki, Idemitsu Petrochemical Co.,Ltd., Ichihara-shi, Chiba-ken (JP)
(74) Representative: Gille Hrabal Struck Neidlein Prop Roos

(56) References cited:
- EP-A- 0 120 394
- EP-A- 0 131 751
- EP-A- 0 174 503
- EP-A- 0 383 954
- EP-A- 0 400 478
- BE-A- 675 110

## Description

### BACKGROUND OF THE INVENTION

### 1. Field of the Invention

The present invention relates to a polycarbonate resin composition, and more particularly to a polycarbonate resin which is excellent in moldability, solvent resistance, impact resistance, or fluidity while possessing the mechanical properties of conventional polycarbonate resin compositions.

### 2. Description of the Related Arts

Processes for production of polycarbonate using phloroglucine or trimellitic acid as a branching agent have heretofore been known, as disclosed in for example, Japanese Patent Publication Nos. 17149/1969, and 11733/1985. Use of these branching agents, however, suffers from a disadvantage in that a trace amount of unreacted matter is apt to cause coloring.

In Japanese Patent Application Laid-Open No. 45318/1984, 1,1,1-tris(4-hydroxyphenyl)ethane is proposed to be used as a branching agent. However, the specification of US Patent No. 4,415,723 discloses, in its Comparative Example A, that the polymer obtained by using this branching agent is colored to pale yellowish green, and suggests the use of a branching agent such as 1,1,2-tris(4-hydroxyphenyl)ethane and 1,1,2-tris(4-hydroxyphenyl)propane. Yet the process disclosed in the above US Patent Specification cannot completely solve the problems of coloring.

It is known that when a polycarbonate is branched for blow molding, its impact resistance decreases. Accordingly, development of a branched polycarbonate having a high impact resistance had been required.

The present inventors' group had investigated from such points of view, and succeeded in solving the problem of hue to develop a branched polycarbonate suitable for blow molding which has acetone-soluble matter of not more than 3.5% by weight and an improved impact-strength and also a process for efficiently producing the branched polycarbonate (Japanese Patent Application Laid-Open No. 182524/1991). Further, the present inventors repeated intensive investigations in order to improve moldability, solvent resistance, impact resistance or fluidity of the above-mentioned branched polycarbonate.

### SUMMARY OF THE INVENTION

As the result, it has been found that a polycarbonate resin composition having the desired properties can be obtained by means of blending a prescribed amount of at least a polymer selected from the group consisting of styrene resin, polyamide resin, polyolefin and rubber-like elastomer with a specified polycarbonate, without imparing the mechanical properties of conventional polycarbonate resin composition.

The present invention has been accomplished based on the above findings. That is, the present invention provides a polycarbonate resin composition consisting essentially of (A) 1 to 99% by weight of a branched polycarbonate having a branched nucleus structure derived from a branching agent represented by the general formula (I): 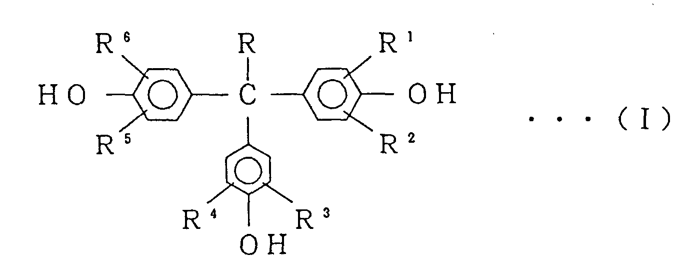 wherein R is a hydrogen atom or an alkyl group having 1 to 5 carbon atoms, and R¹ to R⁶ are hydrogen atoms, alkyl groups having 1 to 5 carbon atoms or halogen atoms, respectively, a viscosity average molecular weight of 15,000 to 40,000, and an acetone-soluble matter of not more than 3.5% by weight, and (B) 99 to 1% by weight of only one polymer selected from the group consisting of styrene resin, polyamide resin, polyolefin, and rubber-like elastomer.

### DESCRIPTION OF THE PREFERRED EMBODIMENTS

The branched polycarbonate of Component (A) of the present invention has a branched nucleus structure derived from a branching agent represented by the general formula (I): 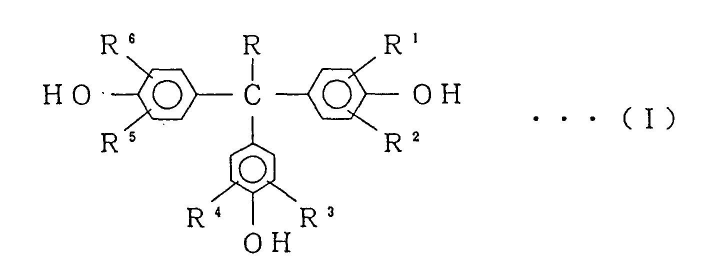 wherein R is a hydrogen atom, an alkyl group having 1 to 5 carbon atoms, such as methyl group, ethyl group, n-propyl group, n-butyl group, and n-pentyl group; and R¹ to R⁶ are hydrogen atoms, alkyl groups having 1 to 5 carbon atoms (e.g., methyl group, ethyl group, n-propyl group, n-butyl group, and n-pentyl group) or halogen atoms (e.g., chlorine atom, bromine atom, and fluorine atom).

The embodiments of the branching agent of the general formula (I) include
1,1,1-tris(4-hydroxyphenyl)methane;
1,1,1-tris(4-hydroxyphenyl)ethane;
1,1,1-tris(4-hydroxyphenyl)propane;
1,1,1-tris(2-methyl-4-hydroxyphenyl)methane;
1,1,1-tris(2-methyl-4-hydroxyphenyl)ethane;
1,1,1-tris(3-methyl-4-hydroxyphenyl)methane;
1,1,1-tris(3-methyl-4-hydroxyphenyl)ethane;
1,1,1-tris(3,5-dimethyl-4-hydroxyphenyl)methane;
1,1,1-tris(3,5-dimethyl-4-hydroxyphenyl)ethane;
1,1,1-tris(3-chloro-4-hydroxyphenyl)methane;
1,1,1-tris(3-chloro-4-hydroxyphenyl)ethane;
1,1,1-tris(3,5-dichloro-4-hydroxyphenyl)methane;
1,1,1-tris(3,5-dichloro-4-hydroxyphenyl)ethane;
1,1,1-tris(3-bromo-4-hydroxyphenyl)methane;
1,1,1-tris(3,5-dibromo-4-hydroxyphenyl)ethane;
1,1,1-tris(3,5-dibromo-4-hydroxyphenyl)methane; and 1,1,1-tris(3,5-dibromo-4-hydroxyphenyl)ethane.

The above branched polycarbonate posesses the branched nucleus structure derived from a branching agent represented by the above-mentioned general formula (I), and specifically represented by the following formula: 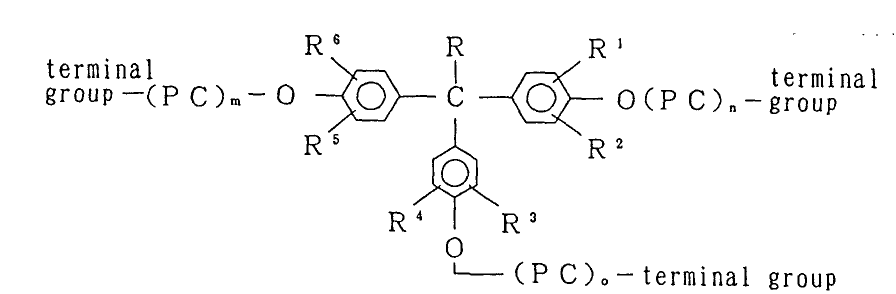 wherein m, n and o are integers, and PC represents a polycarbonate moiety.

PC represents, when bisphenol A is used as starting material component, for instance, a repeating unit of the following formula:

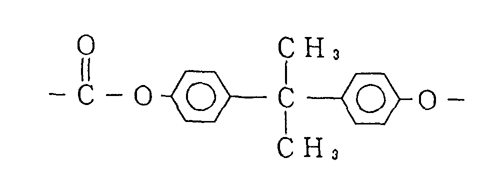

The branched polycarbonate of Component (A) has a specified branched nucleus structure as described above, and a viscosity average molecular weight of 15,000 to 40,000. If the viscosity average molecular weight is less than 15,000, impact resistance of the resulting composition is low, while if it is in excess of 40,000, moldability of the composition results to be poor.

In the above branched polycarbonate, the proportion of acetone-soluble matter is preferably not more than 3.5% by weight. If the proportion of acetone-soluble matter exceeds 3.5% by weight, impact resistance of the composition becomes to be markedly low. The acetone soluble matter therein refers to a component extracted from the objective polycarbonate by Soxhlet extraction using acetone as a solvent.

Above-mentioned branched polycarbonate can be produced according to various processes. For example, the branched polycarbonate can be efficiently produced by a process disclosed in Japanese Patent Application Laid-Open No. 182524/1991, which comprises reacting (i) a polycarbonate oligomer derived from aromatic dihydric phenols, a branching agent represented by the general formula (I) and phosgene, (ii) aromatic dihydric phenols, and (iii) a terminal stopper while stirring in such a way that a reaction mixture containing them is under a turbulent flow condition, and adding aqueous alkali solution at the point where the viscosity of the reaction mixture increases and, at the same time, reacting the reaction mixture under a laminar flow condition.

The branched polycarbonate can also be produced by reacting (i) a polycarbonate oligomer derived from aromatic dihydric phenols and phosgene, (ii) aromatic dihydric phenols, (iii) a branching agent represented by the general formula (I), and (iv) a terminal stopper while stirring so that a reaction mixture containing them is under a turbulent flow condition, and adding aqueous alkali solution at the point where the viscosity of the reaction mixture increases and, at the same time, reacting the reaction mixture under a laminar flow condition.

Component (B) of the present invention is one polymer selected from the group consisting of styrene resin, polyamide resin, polyolefin and rubber-like elastomer.

Styrene resin therein includes polystyrene resin, high impact resistant polystyrene resin (HIPS), styrene-anhydrous maleic acid copolymer, and acrylonitrile-butadiene-styrene (ABS) resin. Specific example of the above-mentioned polystyrene resin are polymers comprising styrene, α-methylstyrene, 2,4-dimethylstyrene, chlorostyrene, and other substituted vinyl aromatic monomers.

High impact resistant polystyrene resin is a polymer obtained by dissolving or mixing a rubber-like elastomer with a vinyl aromatic monomer and polymerizing the mixture. Specific examples of the above-mentioned rubber-like elastomer are polybutadiene, styrene-butadiene-styrene (SBS) copolymer, acrylonitrile-butadiene-styrene (ABS) copolymer, styrene-butadiene rubber (SBR), butadiene-acryl rubber, isoprene rubber, isoprene-styrene rubber, isoprene-acryl rubber, and ethylene-propylene rubber. Among them, polybutadiene is particularly preferable. As the butadiene therein, low cis-polybutadiene (for example, butadiene containing 1 to 30 mol% of 1,2-vinyl bond, and 30 to 42 mol% of 1,4-cis bond), high cis-polybutadiene (for example, butadiene containing 20 mol% or less of 1,2-vinyl bond, and 78 mol% or more of 1,4-cis bond) or mixture thereof.

The proportion of the two components in the above-mentioned styrene-anhydrous maleic acid copolymer can vary widely, and so are the molecular weights of them. Styrene-anhydrous maleic acid copolymer can be prepared by reacting anhydrous maleic acid and styrene in the presence of peroxide catalyst while temperature rising (US Patent Nos. 2,866,771 and 2,971,939). The styrene-anhydrous maleic acid copolymer may contain α-methylstyrene, vinyltoluene, 2,4-dimethylstyrene, chlorostyrene or other substituted styrenes instead of styrene itself. The molecular weight of styrene-anhydrous maleic acid copolymer ranges broad, and preferably 20,000 to 500,000, and more preferably about 100,000 to 400,000. Styrene-anhydrous maleic acid copolymer contains preferably 5 to 50% by weight, more preferably 5 to 30% by weight, and most preferably 8 to 15% by weight of anhydrous maleic acid. Herein rubber-denatured styrene-anhydrous maleic acid copolymer denotes the product of thermal polymerization of styrene monomer and anhydrous maleic acid by the use of a rubber component in the presence of chain transfer agent and radical initiator.

Typical examples of the above-mentioned rubber component are butadiene rubber, butadiene-styrene rubber or butadiene-acryl rubber containing 60 to 95% by weight of butadiene, isoprene rubber, isoprene-styrene rubber or isoprene-acryl rubber containing 60 to 95% by weight of isoprene, A-B type block rubber or A-B-A type block rubber of butadiene-styrene containing butadiene-styrene containing 60 to 95% by weight of butadiene, and ethylene-propylene copolymer (EPT). These rubber components are used as components of mixture. Said components may contain one or plural kinds of these rubber components. The rubber component is preferably contained in a proportion of 2 to 25% by weight, preferably 5 to 12% by weight in the rubber-denatured copolymer resin which is obtained finally. ABS resin to be used in the present invention is a graft polymer obtained by polymerizing at least two compounds selected from the group consisting of vinyl aromatic monomer, vinyl cyano monomer and unsaturated carboxylic alkyl ester monomer, in the presence of conjugated diene rubber, according to a conventional method of polymerization such as emulsion polymerization, bulk polymerization, bulk-suspension polymerization, and emulsion-suspension polymerization. Said graft polymer may contain the ungrafted copolymer produced at graft polymerization or copolymer comprising two or more kinds of the above-mentioned compounds produced separately.

The ratio of composition of the above-mentioned ABS resin is not critical, but to make the physical properties of the final composition valuable in practice, the preferable ratio of the composition is 5 to 70% by weight of conjugated diene rubber, 70 to 20% by weight of vinyl aromatic monomer, and 10 to 50% by weight of vinyl cyano monomer and/or unsaturated carboxylic alkyl ester monomer.

The conjugated diene rubber which constitutes ABS resin includes polybutadiene, butadiene-styrene copolymer, butadiene-acrylonitrile copolymer, and polyisoprene, and they can be used in combination without any problem. Aromatic vinyl monomer includes styrene, α-methylstyrene, and p-methylstyrene. Vinyl cyano monomer includes acrylonitrile, and methacrylonitrile, and unsaturated carboxylic alkylester monomer includes methyl acrylate, ethyl acrylate, methyl methacrylate and hydroxyethyl acrylate.

As polyamide resins as Component (B), any of the open-ring polymer of lactam, the polycondensate of diamine and dibasic acid, and the polycondensate of δ-amino acid, and also mixtures or copolymers of them can be used. Specifically, nylon-6, nylon-6·6, nylon-6·10, nylon-6·12, nylon-11, nylon-12 and nylon-6/6·6 copolymer and the like are mentioned.

Examples of polyolefin as Component (B) are homopolymers of olefins such as α-olefins having 2 to 8 carbon atoms including ethylene, propylene, butene-1, isobutylene, pentene-1, 3-methylbutene-1, 4-methylpentene-1, hexene-1, and octene-1; copolymers comprising two or more kinds of these olefins; and copolymers of olefins having 70 mol% or more, preferably 80 mol% or more of these olefins and vinyl compound (for example, vinyl ester such as vinyl acetate; halogenated vinyl such as vinyl chloride, unsaturated carboxylic acids such as acrylic acid, methacrylic acid, and maleic acid; unsaturated carboxylic acid ester such as methyl acrylate, ethyl acrylate, methyl methacrylate, and ethyl methacrylate). Specifically, low density polyethylene, linear low density polyethylene (LLDPE), high density polyethylene (HDPE), isotactic polypropylene, atactic polypropylene, ethylene-propylene copolymer, ethylene-vinyl acetate copolymer and saponified product thereof, ethylene-methyl acrylate copolymer, ethylene-ethyl acrylate copolymer, and ethylene-methyl methacrylate copolymer are mentioned.

The rubber-like elastomer as Component (B) is not particularly limited, and, for example, natural rubbers, synthetic rubbers, and graft copolymers are suggested. More specifically, polybutadiene (BR), polyisoprene (IR), styrene-butadiene rubber (SBR), acrylonitrile-butadiene rubber (NBR), nitrile-isoprene rubber (NIR), polychloroprene rubber (CR), ethylene-propylene rubber (EPR), ethylene-propylene-diene rubber (EPDM), butyl rubber (IIR), halogenated butyl rubber, styrene-butadiene block copolymer rubber, styrene-isopreneblock copolymer rubber, rubber-like chlorosulfonated polyethylene (CSM), rubber-like chlorinated polyethylene (CPE), acrylic rubber, copolymer of alkyl acrylate and 2-chloroethylvinyl ether (ACM), copolymer of alkyl acrylate and acrylonitrile (ANM), urethane rubber (thermoplastic type), silicone rubber, fluorine rubber, polyester-polyether-polyesterblock copolymer rubber, ethylene-vinyl acetate rubber (EVM) and epichlorohydrin rubber are mentioned.

Further, as the rubber-like elastomer as Component (B) of the present invention, (i) polymers which are obtained by polymerizing one kind or plural kinds of vinyl monomer in the presence of rubber-like polymer containing alkyl acrylate and/or alkyl methacrylate can be used.

Preferred alkyls in alkyl acrylates and alkyl methacrylates are alkyls having 2 to 10 carbon atoms. Specific examples are ethyl acrylate, butyl acrylate, 2-ethylhexyl acrylate, and n-octyl methacrylate. Examples of vinyl monomers are aromatic vinyl compounds such as styrene, α -methylstyrene and the like; acrylic acid esters such as methyl acrylate, ethyl acrylate and the like; and methacrylic acid esters such as methyl methacrylate, ethyl methacrylate and the like. Specifically, graft copolymers (MAS polymers) of n-butyl acrylate and styrene, and methyl methacrylate are mentioned.

Further, as the rubber-like elastomer as Component (B) of the present invention, (ii) polymers obtained by polymerizing one kind or plural kinds of vinyl monomer with the copolymer obtained by copolymerization of alkyl acrylate and/or alkyl methacrylate and a multifunctional polymerizable monomer having conjugated diene double bond are mentioned.

As alkylacrylate or alkylmethacrylate therein, above-mentioned ones are used. Multifunctional polymerizable monomer includes, in addition to butadiene, isoprene, neoprene, compounds having non-conjugated double bond as well as conjugated diene-type double bond in a molecule.

Specific examples of these compounds are 1-methyl-2-vinyl-4,6-heptadiene-1-ol, 7-methyl-3-methylene-1, 6-octadiene, and 1,3,7-octatriene.

In the composition of the present invention, the proportion of the branched polycarbonate as Component (A) is 1 to 99% by weight, preferably 30 to 95% by weight of the total amount of Components (A) and (B). The proportion of the polymer selected from the group consisting of styrene resin, polyamide resin, polyolefin and rubber-like elastomer as Component (B) is 99 to 1% by weight, preferably 70 to 5% by weight. If the proportion of the branched polycarbonate exceeds 99% by weight, the resulting composition is not improved sufficiently in fluidity. On the other hand, if the proportion of the above-mentioned branched polycarbonate is less than 1% by weight, the mechanical strength and the moldability (particularly blow moldability) of the composition are lowered, and no effect by branching the polycarbonate is obtained.

The preferable ratio of composition of Components (A) and (B) is as follows:

When Component (B) is composed of styrene resin, the proportion of branched polycarbonate resin as Component (A) is 1 to 99% by weight, preferably 30 to 95% by weight of the total of Components (A) and (B). The proportion of styrene resin as Component (B) is 99 to 1% by weight, preferably 70 to 5% by weight. If the proportion of the branched polycarbonate is in excess of 99% by weight, the resulting composition is not sufficiently improved in fluidity. On the other hand, if the proportion of the branched polycarbonate is less than 1% by weight, mechanical strength and moldability (particularly blow moldability) of the composition become low, and no effect by branching is obtained.

When Component (B) is composed of amide resin, the proportion of the branched polycarbonate as Component (A) is 30 to 99% by weight, preferably 50 to 95% by weight of the total Components (A) and (B). The proportion of polyamide resin as Component (B) is 70 to 1% by weight, preferably 50 to 5% by weight. If the proportion of the branched polycarbonate is in excess of 99% by weight, the resulting composition is not sufficiently improved in fluidity or solvent resistance. On the other hand, if the proportion of the branched polycarbonate is less than 30% by weight, the mechanical properties and the moldability (particularly blow moldability) of the composition become lower, and the effect by branching polycarbonate is difficult to be obtained.

When Component (B) is composed of polyolefin, the proportion of the branched polycarbonate as Component (A) is 50 to 99% by weight, preferably 70 to 95% by weight of the total amount of Components (A) and (B). The proportion of polyolefin as Component (B) is 50 to 1% by weight, preferably 30 to 5% by weight. If the proportion of the branched polycarbonate is in excess of 99% by weight, the resulting composition is not sufficiently improved in fluidity or solvent resistance. On the other hand, if the proportion of the branched polycarbonate is less than 50% by weight, the mechanical strength and moldability (particularly blow moldability) of the composition become lower, and the effect by branching polycarbonate is difficult to be obtained.

When Component (B) is composed of rubber-like elastomer alone, the proportion of the branched polycarbonate as Component (A) is 40 to 99% by weight, preferably 60 to 99% by weight of the total amount of Components (A) and (B). The proportion of rubber-like elastomer as Component (B) is 60 to 1% by weight, preferably 40 to 1% by weight. If the proportion of the branched polycarbonate is in excess of 99% by weight, the resulting composition is not sufficiently improved in fluidity or low temperature impact resistance. On the other hand, if the proportion of the branched polycarbonate is less than 40% by weight, the swell ratio ofthe composition becomes not so large, and the effect by branching polycarbonate is difficult to be obtained.

In the polycarbonate resin composition of the present invention, various inorganic fillers and additives can, if necessary, be blended so long as the purpose of the present invention is not impaired.

Inorganic fillers blended in order to improve the mechanical strength, the durability, or the increase in quantity of the polycarbonate resin composition include glass fibers (GF), glass beads, glass flakes, carbon black, calcium sulfate, calcium carbonate, calcium silicate, titanium oxide, alumina, silica, asbestos, talc, clay, mica, and quartz powder.

The aforementioned additives include anti-oxidant of hindered phenol type, phosphorus type such as phosphite and phosphate, and amine type; UV absorbers such as benzotriazoles, and benzophenones; external lubricating agents such as aliphatic carboxylates, and paraffines; conventional flame-retardants; mold release agents; antistatic agents; and colorants.

As the hindered phenol type anti-oxidizing agents, BHT (2,6-di-tert-butyl-p-cresol), Irganox 1076 and Irganox 1010 (trade name, produced by CIBA-GEIGY CO.), Ethyl 330 (trade name, produced by ETHYL CO.) and Sumilizer GM (trade name, produced by SUMITOMOCHEMICAL CO., LTD.) are preferably used.

The polycarbonate resin composition of the present invention can be prepared by blending the above-mentioned components and kneading them. Blending and kneading can be conducted by a conventional method with the use of a ribbon blender, a Henschel mixer, a Bunbury mixer, a drum tumbler, a single screw extruder, a twin screw extruder, a co-kneader, a multiple screw extruder or the like. The kneading is appropriately conducted at a heating temperature usually in the range of 250 to 300 °C.

As described above, according to the present invention, a polycarbonate resin composition excellent in fluidability and solvent resistance, and also in moldability, while possessing the mechanical properties of the original polycarbonate can be obtained. The above-mentioned polycarbonate is particularly suitable for blow molding. Accordingly, blow molding products made from the polycarbonate resin composition of the present invention have markedly improved mechanical properties and solvent resistance compared with the conventional ones.

Therefore, the polycarbonate resin composition thus obtained can be molded by various conventional molding methods such as injection molding, hollow molding, extrusion molding, compression molding, calender molding, and rotary molding to prepare molded products such as a bumper and other parts for automobiles, molded products for home electrical appliances, etc. The polycarbonate resin composition of the present invention is suited particularly for blow molding and extrusion molding, and is excellent in vacuum moldability, hollow moldability, and heat bending moldability (particularly blow moldability) in the form of sheet or film.

The present invention will be explained in greater detail with reference to the following examples and comparative examples.

### Reference Example

### (1) Synthesis of Polycarbonate Oligomer A

60 kg of bisphenol A was dissolved in 400ℓ of 5% aqueous sodium hydroxide solution to prepare an aqueous sodium hydroxide solution of bisphenol A.

Subsequently, the aqueous sodium hydroxide solution of bisphenol A maintained at room temperature was introduced into a tubular reactor with an inner diameter of 10 mm and tube length of 10 m through an orifice plate at a flow rate of 138 ℓ/hr, and methylene chloride was introduced therein at a flow rate of 69 ℓ/hr, and phosgene was blown thereinto in parallel at a flow rate of 10.7 kg/hr to continuously react them for 3 hours. The tubular reactor used herein was a double tube, and the discharge temperature of the reaction solution was maintained at 25°C by passing cooling water in the jacket section.

The discharged liquid (the reaction solution) was adjusted to pH 10 to 11. The reaction solution thus obtained was allowed to stand, and thus the aqueous layer was separated and removed to obtain 220 ℓ of the methylene chloride layer. Further, 170 ℓ of methylene chloride was added to the methylene chloride layer, and the resulting mixture was thoroughly stirred. The product thus obtained was used as the polycarbonate oligomer A (concentration : 317 g/ℓ). The degree of polymerization of the polycarbonate oligomer thus obtained was 3 to 4.

### (2) Synthesis of Polycarbonate Oligomer B

60 kg of bisphenol A and 0.58 kg of 1,1,1-tris (4-hydroxyphenyl)ethane were dissolved in 400 ℓ of 5% aqueous sodium hydroxide solution to prepare an aqueous sodium hydroxide solution.

Thereafter, in the same manner as in (1) above, a polycarbonate oligomer (Polycarbonate Oligomer B) with a concentration of 321 g/ℓ was obtained.

### Preparation Example 1 (Preparation of Polycarbonate)

3.39 ℓ of methylene chloride was added to 5.61 ℓ of Polycarbonate Oligomer B to prepare Solution I.

Separately, 173.4 g of sodium hydroxide and 482.9 g of bisphenol A were dissolved in 2.9 ℓ of water to prepare Solution II.

The above Solution I and Solution II were mixed, 0.856 g of triethylamine as catalyst and 37.6 g of p-tert-butylphenol as a terminal stopper were added thereto, and the mixture was stirred in a turbulent flow condition for 10 minutes at 600 rpm.

Thereafter, 167 m ℓ of an aqueous sodium hydroxide solution (concentration : 48% by weight) was added, and the resulting mixture was reacted while stirring under a laminar flow condition for 60 minutes at 200 rpm.

After the reaction was completed, 5ℓ of water and 5ℓ of methylene chloride were added, and the mixture was separated into a methylene chloride layer and an aqueous layer. The methylene chloride layer was alkali-washed with 0.01N aqueous sodium hydroxide solution, and further acid-washed with 0.1N hydrochloric acid.

Then, by washing with water, methylene chloride was removed to obtain polycarbonate as a polymer in flake form. The acetone-soluble matter of the flake-form polymer obtained was measured by Soxhlet extraction over 8 hours. The viscosity average molecular weight of the resulting polycarbonate was 2.7x10⁴. The polycarbonate thus obtained is referred to as A-1.

### Preparation Example 2 (Preparation of Polycarbonate)

To 5.68ℓ of Polycarbonate Oligomer A. 3.32ℓ of methylene chloride was added to prepare Solution III.

Solution III and Solution II used in Preparation Example 1 were mixed, 0.856 g of triethylamine as a catalyst, 37.6 g of p-tert-butylphenol as a terminal stopper and 15.0 g of 1,1,1-tris(4-hydroxyphenyl)ethane as a branching agent were added thereto, and the mixture were stirred under a turbulent flow condition for 10 minutes at 600 rpm.

Then, 167 mℓ of an aqueous sodium hydroxide solution (concentration : 48% by weight) was added thereto, and the resulted solution was reacted with stirring under a laminar flow condition for 60 minutes at 200 rpm.

When the reaction was completed, 5 ℓ of water and 5 ℓ of methylene chloride were added, and a methylene chloride layer and an aqueous layer were separated. The methylene chloride layer was alkali-washed with 0.01N aqueous sodium hydroxide solution, and then acid-washed with 0.1N hydrochloric acid.

Then, by washing with water, the methylene chloride was removed away, and a polymer in flake, that is, polycarbonate was obtained. The viscosity average molecular weight of the resulting polycarbonate was 2.7x10⁴. This polycarbonate is referred to as A-2.

### Preparation Example 3 (Preparation of Polycarbonate)

The procedure of Preparation Example 1 was repeated except that 53.2 g of p-cumylphenol was used in place of 37.6 g of p-tert-butylphenol. The viscosity average molecular weight of the resulting polycarbonate was 2.7x10⁴. This polycarbonate is referred to as A-3.

### Preparation Example 4 (Preparation of Polycarbonate)

The procedure of Preparation Example 1 was repeated except that 45.5 g of p-tert-butylphenol was used. The viscosity average molecular weight of the resulting polycarbonate was 2.1x10⁴. This polycarbonate is referred to as A-4.

### Examples 1 to 15 and Comparative Examples 1 to 7

Each prescribed amount of polycarbonate resin, styrene resin and other additives were premixed in a drum tumbler, then supplied to an extruder to be kneaded at 250 °C, and pelletized. Further, the resulting pellet was dried at 120 °C for 6 hours, and injection-molded at a die temperature of 80 °C and a molding temperature of 250 °C to obtain a test piece.

The pellet was measured on melt properties (flow value MIR, swell ratio, and melting intensity), and the test piece was measured on tensile strength. The results are shown in Table 1-1 to Table 1-4.

Conditions of measuring melt properties,and tensile strength are as follows.

### 1) Flow Value

Measured according to JIS K-7210 (measured at 280°C).

### 2) MIR (Index for blow molding. Desired value is 50 or higher.)

Melt index ratio (MI_{11kg} /MI_{325kg}). Measured at 280 °C.

### 3) Swell ratio (Indication of blow molding and the like. Desired value is 1.2 or higher.)

Value obtained by dividing a cross-sectional area of a strand extruded when a load of 11 kg is applied to a molten resin in measurement of melt index, by a cross-sectional area of an orifice.

### 4) Melt Tension (Indication of blow molding and the like. Desired value is 2(g) or higher.)

Tension of strand resulted at a tensile rate of 9.42 m/min.( Orifice : L/D=8/21 ) was measured at 280 °C.

### 5) Tensile Strength (kg/cm²)

Measured according to JIS K-7113.

**Table 1-1**

| | Polycarbonate | | Styrene Resin | |
|---|---|---|---|---|
| No. | Kind | (% by weight) | Kind | (% by weight) |
| Example 1 | A-1 | 90 | ABS^{*3} | 10 |
| Example 2 | A-1 | 70 | ABS^{*3} | 30 |
| Example 3 | A-2 | 70 | ABS^{*3} | 30 |
| Example 4 | A-3 | 70 | ABS^{*3} | 30 |
| Example 5 | A-1 | 50 | ABS^{*3} | 50 |
| Example 6 | A-1 | 30 | ABS^{*3} | 70 |
| Example 7 | A-1 | 70 | HISMA^{*4} | 30 |
| Example 8 | A-1 | 30 | HISMA^{*4} | 70 |
| Example 9 | A-1 | 80 | GPSMA^{*5} | 20 |
| Example 10 | A-1 | 90 | GPPS ^{*6} | 10 |
| Example 11 | A-1 | 90 | HIPS ^{*7} | 10 |
| Example 12 | A-1 | 70 | ABS^{*3} | 30 |
| Comparative Example 1 | A-1 | 100 | - | - |
| Comparative Example 2 | B-1^{*1} | 100 | - | - |
| Comparative Example 3 | B-1^{*1} | 70 | ABS^{*3} | 30 |
| Comparative Example 4 | B-1^{*1} | 70 | HISMA^{*4} | 30 |
| Comparative Example 5 | B-1^{*1} | 90 | GPPS | 10 |
| Comparative Example 6 | B-1^{*1} | 90 | HIPS | 10 |
| Comparative Example 7 | B-2^{*2} | 70 | ABS^{*3} | 30 |

| | | | | |
|---|---|---|---|---|
| *1 Toughlon A 2700 (polycarbonate produced from bisphenol A) produced by Idemitsu Petrochemical Co., Ltd. | | | | |
| *2 Toughlon A 2200 (polycarbonate produced from bisphenol A) produced by Idemitsu Petrochemical Co., Ltd. | | | | |
| *3 ABS comprising 28 parts by weight of butadiene, 24 part by weight of acrylonitrile, and 48 parts by weight of styrene. | | | | |
| *4 Dilark D 250 produced by Arco Corporation, US. | | | | |
| *5 Moremax UG-430 produced by Idemitsu Petrochemical Co.,Ltd. | | | | |
| *6 Idemitsu Styrol HH 30 produced by Idemitsu Petrochemical Co., Ltd. | | | | |
| *7 Idemitsu Styrol HT 52 Produced by Idemitsu Petrochemical Co., Ltd. | | | | |

**Table 1-2**

| | Result of Evaluation | | | | |
|---|---|---|---|---|---|
| No. | Tensile Strength (kg/cm²) | Flow Value (ml/min) | MIR | Swell Ratio | Melt Tension(g) |
| Example 1 | 570 | 12x10⁻² | 81 | 1.32 | 6.4 |
| Example 2 | 530 | 18x10⁻² | 84 | 1.26 | 6.1 |
| Example 3 | 530 | 18x10⁻² | 83 | 1.26 | 6.3 |
| Example 4 | 530 | 17x10⁻² | 87 | 1.26 | 6.2 |
| Example 5 | 510 | 40x10⁻² | 105 | 1.28 | 4.8 |
| Example 6 | 480 | 58x10⁻² | 120 | 1.25 | 3.7 |
| Example 7 | 540 | 38x10⁻² | 93 | 1.31 | 5.2 |
| Example 8 | 430 | 52x10⁻² | 118 | 1.28 | 3.2 |
| Example 9 | 610 | 15x10⁻² | 73 | 1.28 | 4.9 |
| Example 10 | 630 | 15x10⁻² | 79 | 1.41 | 6.0 |
| Example 11 | 600 | 16x10⁻² | 78 | 1.38 | 5.7 |
| Example 12 | 520 | 20x10⁻² | 93 | 1.24 | 5.3 |
| Comparative Example 1 | 630 | 2.5x10⁻² | 75 | 2.75 | 6.9 |
| Comparative Example 2 | 630 | 2.2x10⁻² | 20 | 1.13 | 0.8 |
| Comparative Example 3 | 510 | 28x10⁻² | 38 | 1.14 | 0.6 |
| Comparative Example 4 | 530 | 36x10⁻² | 27 | 1.12 | 0.4 |
| Comparative Example 5 | 610 | 15x10⁻² | 31 | 1.18 | 0.3 |
| Comparative Example 6 | 610 | 15x10⁻² | 29 | 1.12 | 0.3 |
| Comparative Example 7 | 510 | 32x10⁻² | 41 | 1.12 | 0.5 |

**Table 1-3**

| No. | Resin Composition as Base Material | Ratio by Weight(wt%) | Additive | Ratio by Weight(wt%) |
|---|---|---|---|---|
| Example 13 | Example 1 | 90 | GF*⁸ | 10 |
| Example 14 | Example 10 | 99.5 | Lubricant *⁹ | 0.5 |
| Example 15 | Example 3 | 95 | Flame *¹⁰ Retardant | 5 |

| | | | | |
|---|---|---|---|---|
| *8 03 MA 409C produced by Asahi Fiber Glass Co., Ltd. (glass fiber having a diameter of 13µm and a length of 3 mm) | | | | |
| *9 Rikemal S100A produced by Riken Vitamin Co., Ltd. (stearic acid monoglyceride) | | | | |
| *10 BC-58 produced by Great Lakes Ltd. (polycarbonate oligomer produced from tetrabromobisphenol A (TBA) and phosgene) | | | | |

**Table 1-4**

| No. | Result of Evaluation | | | | |
|---|---|---|---|---|---|
| | Tensile Strength (kg/cm²) | Flow Value (ml/min) | MIR | Swell Ratio | Melt Tension (g) |
| Example 13 | 1050 | 15x10⁻² | 72 | 1.41 | 5.8 |
| Example 14 | 620 | 18x10⁻² | 82 | 1.42 | 5.7 |
| Example 15 | 490 | 24x10⁻² | 102 | 1.29 | 6.4 |

### Examples 16 to 26 and Comparative Examples 8 to 13

Each prescribed amount of polycarbonate, polyamide resin and other additives were premixed in a drum tumbler, then supplied to an extruder to be kneaded at 270°C, and pelletized. Further, the resulting pellet was dried at 120 °C for 6 hours, and injection-molded at a die temperature of 80°C and a molding temperature of 270°C to obtain a test piece.

The pellet was measured on melt properties (flow value, MIR, swell ratio, and melt tension), and the test piece was measured on tensile strength and solvent resistance. The results are shown in Table 1-5 to Table 1-8.

Conditions of measuring melt properties, tensile strength, and solvent resistance are as follows.

### 1) Flow Value

Measured according to JIS K-7210.

### 2) MIR (Index for blow molding. Desired value is 50 or higher.)

Melt index ratio (MI_{11kg}/MI_{325g}). Measured at 280°C.

### 3) Swell ratio (Indication of blow molding and the like. Desired value is 1.2 or higher.)

Value obtained by dividing a cross-sectional area of a strand extruded when a load of 11 kg is applied to a molten resin in measurement of melt index, by a cross-sectional area of an orifice.

### 4) Melt Tension (Indication of blow molding and the like. Desired value is 2(g) or higher.)

Tension of strand resulted at a tensile rate of 9.42 m/min.( Orifice : L/D=8/21) was measured at 280°C.

### 5) Tensile Strength (kg/cm²)

Measured according to JIS K-7113.

### 6) Solvent Resistance

Determined by critical strain in ratio by volume, in a solvent (ratio of composition : toluene/isooctane = 40/60), according to the 1/4 oval method described in Nakatsuji et al. "Shikizai" vol. 39, page 455 (1966).

**Table 1-5**

| | Polycarbonate | | Polyamide Resin | |
|---|---|---|---|---|
| No. | Kind | Ratio by Weight(wt%) | Kind | Ratio by Weight(wt%) |
| Example 16 | A-1 | 90 | PA-6 ^{*3} | 10 |
| Example 17 | A-2 | 90 | PA-6 ^{*3} | 10 |
| Example 18 | A-3 | 90 | PA-6 ^{*3} | 10 |
| Example 19 | A-4 | 90 | PA-6 ^{*3} | 10 |
| Example 20 | A-1 | 70 | PA-6 ^{*3} | 30 |
| Example 21 | A-2 | 50 | PA-6 ^{*3} | 50 |
| Example 22 | A-1 | 80 | PA-66^{*4} | 10 |
| Example 23 | A-2 | 70 | PA-66^{*4} | 30 |
| Comparative Example 8 | A-2 | 100 | - | - |
| Comparative Example 9 | B-1^{*1} | 100 | - | - |
| Comparative Example 10 | B-2^{*2} | 100 | - | - |
| Comparative Example 11 | B-1^{*1} | 70 | PA-6 ^{*3} | 30 |

| | | | | |
|---|---|---|---|---|
| *1 Toughlon A 2700 (polycarbonate produced from bisphenol A) produced by Idemitsu Petrochemical Co., Ltd. | | | | |
| *2 Toughlon A 2200 (polycarbonate produced from bisphenol A) produced by Idemitsu Petrochemical Co., Ltd. | | | | |
| *3 UBE Nylon 1013B produced by Ube Industries, Ltd. | | | | |
| *4 UBE Nylon 2020B produced by Ube Industries, Ltd. | | | | |

**Table 1-6**

| | Result of Evaluation | | | | | |
|---|---|---|---|---|---|---|
| No. | Tensile Strength (kg/cm²) | Solvent Resistance | Flow Value (ml/min) | MIR | Swell Ratio | Melt Tension (g) |
| Example 16 | 670 | 0.35 | 6.8x10⁻² | 92 | 1.58 | 4.8 |
| Example 17 | 670 | 0.35 | 6.7x10⁻² | 90 | 1.58 | 4.8 |
| Example 18 | 670 | 0.34 | 6.7x10⁻² | 91 | 1.58 | 4.8 |
| Example 19 | 660 | 0.33 | 10.0x10⁻² | 98 | 1.55 | 4.2 |
| Example 20 | 690 | 0.80 | 12.0x10⁻² | 105 | 1.48 | 3.7 |
| Example 21 | 700 | 1.0< | 19.0x10⁻² | 108 | 1.35 | 3.5 |
| Example 22 | 680 | 0.60 | 9.6x10⁻² | 97 | 1.42 | 3.9 |
| Example 23 | 690 | 0.80 | 10.5x10⁻² | 96 | 1.47 | 3.8 |
| Comparative Example 8 | 630 | 0.20 | 2.5x10⁻² | 75 | 2.75 | 6.8 |
| Comparative Example 9 | 630 | 0.20 | 2.2x10⁻² | 20 | 1.13 | 0.8 |
| Comparative Example 10 | 640 | 0.10 | 6.5x10⁻² | 24 | 1.16 | 0.4 |
| Comparative Example 11 | 680 | 0.80 | 13.0x10⁻² | 35 | 1.12 | 0.6 |

**Table 1-7**

| No. | Resin Composition as Base Material | Ratio by Weight (wt%) | Additive | Ratio by Weight (wt%) |
|---|---|---|---|---|
| Example 24 | Example 20 | 90 | GF *⁵ | 10 |
| Example 25 | Example 16 | 99.5 | Lubricant *⁶ | 0.5 |
| Example 26 | Example 23 | 95 | Flame Retardant *⁷ | 5 |
| Comparative Example 12 | Comparative Example 11 | 90 | GF *⁵ | 10 |
| Comparative Example 13 | Comparative Example 11 | 95 | Flame Retardant | 5 |

| | | | | |
|---|---|---|---|---|
| *5 03 MA 409C produced by Asahi Fiber Glass Co., Ltd. (glass fiber having a diameter of 13µm, a length of 3 mm) | | | | |
| *6 Rikemal S100A produced by Riken Vitamin Co., Ltd. (stearic acid monoglyceride) | | | | |
| *7 BC-58 produced by Great Lakes Ltd. (polycarbonate oligomer produced from tetrabromobisphenol A (TBA) and phosgene) | | | | |

**Table 1-8**

| No. | Result of Evaluation | | | | | |
|---|---|---|---|---|---|---|
| | Tensile Strength (kg/cm²) | Solvent Resistance | Flow Value (ml/min) | MIR | Swell Ratio | Melt Tension (g) |
| Example 24 | 1050 | 0.80 | 6.8x10⁻² | 97 | 1.53 | 4.3 |
| Example 25 | 660 | 0.35 | 7.0x10⁻² | 95 | 1.55 | 4.7 |
| Example 26 | 700 | 1.0 < | 9.8x10⁻² | 93 | 1.49 | 3.9 |
| Comparative Example 12 | 700 | 1.0 < | 9.5x10⁻² | 34 | 1.08 | 0.3 |

### Examples 27 to 39 and Comparative Examples 14 to 19

Each prescribed amount of polycarbonate, polyolefin and other additives were premixed in a drum tumbler, then supplied to an extruder to be kneaded at 280 °C, and pelletized. Further, the resulting pellet was dried at 120°C for 6 hours, and injection-molded at a die temperature of 80 °C and a molding temperature of 280°C to obtain a test piece.

The pellet was measured on melting properties (flow value, MIR, swell ratio, and melt tension), and the test piece was measured on tensile strength and solvent resistance. The results are shown in Table 1-9 to Table 1-12.

Conditions of measuring melt properties, tensile strength, and solvent resistance are as follows.

### 1) Flow Value

Measured according to JIS K-7210.

### 2) MIR (Index for blow molding. Desired value is 50 or higher.)

Melt index ratio (MI_{11kg}/ MI_{325g}). Measured at 280°C.

### 3) Swell ratio (Indication of blow molding and the like. Desired value is 1.2 or higher.)

Value obtained by dividing a cross-sectional area of a strand extruded when a load of 11 kg is applied to a molten resin in measurement of melt index, by a cross-sectional area of an orifice.

### 4) Melt Tension (Indication of blow molding and the like. Desired value is 2(g) or higher.)

Tension of strand resulted at a tensile rate of 9.42 m/min. (Orifice : L/D=8/21) was measured at 280°C.

### 5) Tensile Strength (kg/cm²)

Measured according to JIS K-7113.

### 6) Solvent Resistance

Determined by critical strain in ratio by volume, in a solvent (ratio of composition : toluene/isooctane = 40/60), according to the 1/4 oval method described in Nakatsuji et al. "Shikizai" vol.39, page 455 (1966).

**Table 1-9**

| | Polycarbonate | | Polyolefin | |
|---|---|---|---|---|
| No. | Kind | Ratio by Weight(wt%) | Kind | Ratio by Weight(wt%) |
| Example 27 | A-1 | 90 | HDPE^{*2} | 10 |
| Example 28 | A-2 | 90 | HDPE^{*2} | 10 |
| Example 29 | A-3 | 90 | HDPE^{*2} | 10 |
| Example 30 | A-4 | 90 | HDPE^{*2} | 10 |
| Example 31 | A-2 | 80 | HDPE^{*2} | 20 |
| Example 32 | A-3 | 95 | PP^{*3} | 5 |
| Example 33 | A-1 | 80 | PP^{*3} | 20 |
| Example 34 | A-1 | 90 | LLDPE ^{*4} | 10 |
| Example 35 | A-1 | 80 | LLDPE ^{*4} | 20 |
| Comparative Example 14 | A-1 | 100 | - | - |
| Comparative Example 15 | B-1 ^{*1} | 100 | - | - |
| Comparative Example 16 | B-1 ^{*1} | 90 | HDPE^{*2} | 10 |
| Comparative Example 17 | B-1 ^{*1} | 30 | PP^{*3} | 70 |

| | | | | |
|---|---|---|---|---|
| *1 Toughlon A 2700 (polycarbonate produced from bisphenol A) produced by Idemitsu Petrochemical Co., Ltd. | | | | |
| *2 Idemitsu Polyethylene 640 UF (high density polyethylene) produced by Idemitsu Petrochemical Co., Ltd. | | | | |
| *3 Idemitsu Polypro E100G (polypropylene) produced by Idemitsu Petrochemical Co.. Ltd. | | | | |
| *4 Idemitsu Polyethylene L 0134H (linear low density polyethylene) produced by Idemitsu Petrochemical Co.. Ltd. | | | | |

**Table 1-10**

| | Result of Evaluation | | | | | |
|---|---|---|---|---|---|---|
| No. | Tensile Strength (kg/cm²) | Solvent Resistance | Flow Value (ml/min) | MIR | Swell Ratio | Melt Tension (g) |
| Example 27 | 550 | 0.45 | 6.0x10⁻² | 85 | 1.53 | 4.6 |
| Example 28 | 550 | 0.45 | 6. 1x10⁻² | 85 | 1.53 | 4.6 |
| Example 29 | 550 | 0.45 | 6.0x10⁻² | 86 | 1.53 | 4.5 |
| Example 30 | 540 | 0.45 | 12.0x10⁻² | 90 | 1.42 | 3.9 |
| Example 31 | 500 | 0.65 | 7.2x10⁻² | 87 | 1.52 | 4.7 |
| Example 32 | 580 | 0.35 | 5.4x10⁻² | 84 | 1.55 | 4.8 |
| Example 33 | 520 | 0.70 | 5.9x10⁻² | 87 | 1.49 | 4.3 |
| Example 34 | 480 | 0.43 | 7.3x10⁻² | 82 | 1.63 | 3.9 |
| Example 35 | 420 | 0.60 | 9.3x10⁻² | 91 | 1.65 | 3.5 |
| Comparative Example 14 | 630 | 0.20 | 2.5x10⁻² | 75 | 2.75 | 6.9 |
| Comparative Example 15 | 630 | 0.20 | 2.2x10⁻² | 20 | 1.13 | 0.8 |
| Comparative Example 16 | 540 | 0.45 | 6.1x10⁻² | 22 | 1.25 | 0.2 |
| Comparative Example 17 | 420 | 1.0< | 35.0x10⁻² | 120 | 1.18 | 0.1 |

**Table 1-11**

| No. | Resin Composition as Base Material | Ratio by Weight (wt%) | Additive | Ratio by Weight (wt%) |
|---|---|---|---|---|
| Example 36 | Example 28 | 90 | GF *⁵ | 10 |
| Example 37 | Example 27 | 99.5 | Lubricant *⁶ | 0.5 |
| Example 38 | Example 31 | 90 | Flame Retardant *⁷ | 10 |
| Comparative Example 18 | Comparative Example 16 | 90 | GF *⁵ | 10 |
| Comparative Example 19 | Comparative Example 16 | 99.5 | Lubricant *⁶ | 0.5 |

| | | | | |
|---|---|---|---|---|
| *5 03 MA 409C produced by Asahi Fiber Glass Co., Ltd. (glass fiber having a diameter of 13µm and a length of 3 mm) | | | | |
| *6 Rikemal S100A produced by Riken Vitamin Co., Ltd. (stearic acid monoglyceride) | | | | |
| *7 BC-58 produced by Great Lakes Ltd. (polycarbonate oligomer produced from tetrabromobisphenol A (TBA) and phosgene) | | | | |

**Table 1-12**

| | Result of Evaluation | | | | | |
|---|---|---|---|---|---|---|
| No. | Tensile Strength (kg/cm²) | Solvent Resistance | Flow Value (ml/min) | MIR | Swell Ratio | Melt Tension (g) |
| Example 36 | 980 | 0.48 | 4.8x10⁻² | 73 | 1.54 | 3.2 |
| Example 37 | 520 | 0.32 | 7.1x10⁻² | 84 | 1.53 | 4.6 |
| Example 38 | 470 | 1.0 < | 6.5x10⁻² | 87 | 1.48 | 4.2 |
| Comparative Example 18 | 990 | 0.47 | 4.7x10⁻² | 32 | 1.17 | 0.3 |
| Comparative Example 19 | 510 | 0.22 | 7.2x10⁻² | 27 | 1.22 | 0.2 |

### Examples 40 to 57 and Comparative Examples 20 to 27

Each prescribed amount of polycarbonate, rubber-like elastomer and other additives were premixed in a drum tumbler, then supplied to an extruder to be kneaded at 280 °C, and pelletized. Further, the resulting pellet was dried at 120 °C for 6 hours, and injection-molded at a die temperature of 80°C and a molding temperature of 280°C to obtain a test piece.

The pellet was measured on melting properties (flow value, MIR. swell ratio, and melt tension), and the test piece was measured on tensile strength and impact resistance. The results are shown in Table 1-13 to Table 1-17.

Conditions of measuring melt properties, tensile strength, and Izod impact strength are as follows.

### 1) Flow Value

Measured according to JIS K-7210.

### 2) MIR (Index for blow molding. Desired value is 50 or higher.)

Melt index ratio (MI_{11kg}/MI_{325g} ). Measured at 280°C.

### 3) Swell ratio (Indication of blow molding and the like. Desired value is 1.2 or higher.)

Value obtained by dividing a cross-sectional area of a strand extruded when a load of 11 kg is applied to a molten resin in measurement of melt index, by a cross-sectional area of an orifice.

### 4) Melt Tension (Indication of blow molding and the like. Desired value is 2(g) or higher.)

Tension of strand resulted at a tensile rate of 9.42 m/min.( Orifice : L/D=8/21) was measured at 280°C.

### 5) Tensile Strength (kg/cm²)

Measured according to JIS K-7113.

### 6) Izod Impact Strength

Measured according to JIS K-7110.

**Table 1-13**

| Kind of Rubber-like Elastomer | Name of the Product | Manufacturer |
|---|---|---|
| (a) | Paraloid KM330 (acrylic rubber) | Rohm & Haas Co., US |
| (b) | Hiblen B611 (acrylic rubber) | Nippon Zeon Co. |
| (c) | HIA-15 (acrylic rubber) | KUREHA Chemicals |
| (d) | Metablen W529 (acrylic rubber) | Mitsubishi Rayon Co. |
| (e) | Butyl 268 (butylic rubber) | Nippon Synthetic Rubber Co. |
| (f) | EP 57P (ethylene-propylene-diene rubber) | Nippon Synthetic Rubber Co. |
| (g) | Kaliflex TR1101 (styrene-butadiene-styrene rubber) | Shell Chemicals Co. |
| (h) | Hiblen B601 (acrylic rubber) | Nippon Zeon Co. |

**Table 1-14**

| | Polycarbonate | | Rubber-like Elastomer | |
|---|---|---|---|---|
| No. | Kind | Ratio by Weight (wt%) | Kind | Ratio by Weight (wt%) |
| Example 39 | A-1 | 90 | (a) | 10 |
| Example 40 | A-2 | 90 | (a) | 10 |
| Example 41 | A-3 | 90 | (a) | 10 |
| Example 42 | A-4 | 90 | (a) | 10 |
| Example 43 | A-1 | 70 | (a) | 30 |
| Example 44 | A-1 | 90 | (b) | 10 |
| Example 45 | A-3 | 80 | (b) | 20 |
| Example 46 | A-1 | 70 | (c) | 30 |
| Example 47 | A-1 | 90 | (d). | 10 |
| Example 48 | A-2 | 95 | (e) | 5 |
| Example 49 | A-2 | 90 | (e) | 10 |
| Example 50 | A-4 | 95 | (e) | 5 |
| Example 51 | A-1 | 95 | (f) | 5 |
| Example 52 | A-2 | 95 | (g) | 5 |
| Example 53 | A-1 | 90 | (h) | 10 |
| Comparative Example 20 | A-2 | 100 | - | - |
| Comparative Example 21 | A-4 | 100 | - | - |
| Comparative Example 22 | B-1 ^{*1} | 100 | - | - |
| Comparative Example 23 | B-1 ^{*1} | 90 | (a) | 10 |
| Comparative Example 24 | B-2 ^{*2} | 90 | (c) | 10 |

| | | | | |
|---|---|---|---|---|
| *1 Toughlon A2700 (polycarbonate produced by bisphenol A) produced by Idemitsu Petrochemical Co., Ltd. | | | | |
| *2 Toughlon A2200 (polycarbonate produced by bisphenol A) produced by Idemitsu Petrochemical Co., Ltd. | | | | |

**Table 1-15**

| | Result of Evaluation | | | | | |
|---|---|---|---|---|---|---|
| No. | Tensile Strength (kg/cm²) | Izod Impact Strength | Flow Value (ml/min) | MIR | Swell Ratio | Melt Tension (g) |
| Example 39 | 530 | 60 | 6.2X10⁻² | 85 | 1.53 | 4.3 |
| Example 40 | 530 | 58 | 6.2X10⁻² | 84 | 1.53 | 4.3 |
| Example 41 | 530 | 59 | 6.3X10⁻² | 85 | 1.54 | 4.2 |
| Example 42 | 540 | 55 | 12.3x10⁻² | 92 | 1.48 | 3.9 |
| Example 43 | 420 | 82 | 12.0X10⁻² | 105 | 1.43 | 2.5 |
| Example 44 | 540 | 72 | 6.5X10⁻² | 83 | 1.62 | 4.8 |
| Example 45 | 520 | 80 | 8.1X10⁻² | 92 | 1.63 | 4.2 |
| Example 46 | 430 | 83 | 9.5X10⁻² | 98 | 1.61 | 3.8 |
| Example 47 | 520 | 70 | 6.3X10⁻² | 87 | 1.48 | 4.8 |
| Example 48 | 590 | 62 | 8.2X10⁻² | 67 | 1.38 | 6.2 |
| Example 49 | 570 | 68 | 10.2X10⁻² | 89 | 1.41 | 4.5 |
| Example 50 | 550 | 60 | 15.1X10⁻² | 92 | 1.35 | 3.5 |
| Example 51 | 590 | 57 | 7.1X10⁻² | 65 | 1.32 | 5.2 |
| Example 52 | 590 | 52 | 6.0X10⁻² | 62 | 1.35 | 5.4 |
| Example 53 | 550 | 70 | 6.2X10⁻² | 62 | 1.28 | 5.0 |
| Comparative Example 20 | 630 | 40 | 2.7X10⁻² | 78 | 2.72 | 6.9 |
| Comparative Example 21 | 630 | 20 | 8.2X10⁻² | 75 | 2.68 | 5.8 |
| Comparative Example 22 | 630 | 40 | 2.5X10⁻² | 20 | 1.13 | 0.8 |
| Comparative Example 23 | 500 | 65 | 6.1X10⁻² | 24 | 1.12 | 0.4 |
| Comparative Example 24 | 480 | 54 | 13.2X10⁻² | 32 | 1.08 | 0.2 |

**Table 1-16**

| No. | Resin Composition as Base Material | Ratio by Weight (wt%) | Additive | Ratio by Weight (wt%) |
|---|---|---|---|---|
| Example 54 | Example 39 | 99.5 | Lubricant *³ | 0.5 |
| Example 55 | Example 40 | 90 | GF*⁴ | 10 |
| Example 56 | Example 39 | 95 | Flame *⁵ Retardant | 5 |
| Comparative Example 25 | B-1 | 90 | GF*⁴ | 10 |
| Comparative Example 26 | Comparative Example 23 | 99.5 | Lubricant *³ | 0.5 |
| Comparative Example 27 | Comparative Example 23 | 95 | Flame *⁵ Retardant | 5 |

| | | | | |
|---|---|---|---|---|
| *3 Rikemal S100A produced by Riken Vitamin co., Ltd. (stearic acid monoglyceride) | | | | |
| *4 MA409C produced by Asahi Fiber Glass Co., Ltd. (glass fiber having a diameter of 13µm and a length of 6 mm) | | | | |
| *5 BC-58 produced by Great Lakes Ltd. (polycarbonate oligomer produced by tetrabromobisphenol A (TBA) and phosgene) | | | | |

**Table 1-17**

| | Result of Evaluation | | | | | |
|---|---|---|---|---|---|---|
| No. | Tensile Strength (kg/cm²) | Izod Impact Strength | Flow Value (ml/min) | MIR | Swell Ratio | Melt Tension (g) |
| Example 54 | 520 | 55 | 6.0x10⁻² | 82 | 1.42 | 4.5 |
| Example 55 | 1050 | 20 | 3.8x10⁻² | 75 | 1.53 | 2.9 |
| Example 56 | 550 | 58 | 5.7x10⁻² | 78 | 1.51 | 3.4 |
| Comparative Example 25 | 1100 | 7 | 1.3x10⁻² | 18 | 1.19 | 0.2 |
| Comparative Example 26 | 480 | 52 | 6.2x10⁻² | 22 | 1.12 | 0.2 |
| Comparative Example 27 | 480 | 48 | 6.3x10⁻² | 20 | 1.08 | 0.1 |

## Claims

1. A polycarbonate resin composition consisting essentially of (A) 1 to 99% by weight of a branched polycarbonate having a branched nucleus structure derived from a branching agent represented by the general formula (I): 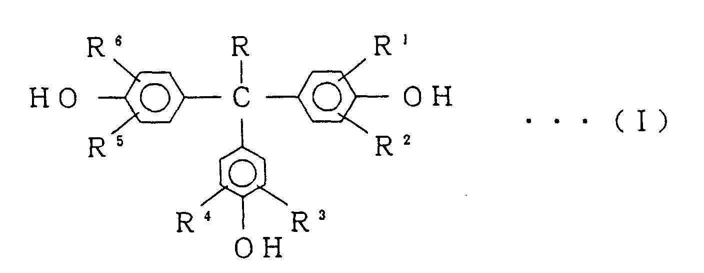 wherein R is a hydrogen atom or an alkyl group having 1 to 5 carbon atoms, and R¹ to R⁶ are hydrogen atoms, alkyl groups having 1 to 5 carbon atoms or halogen atoms, respectively,
a viscosity average molecular weight of 15,000 to 40,000, and an acetone-soluble matter of not more than 3.5% by weight, and (B) 99 to 1% by weight of one polymer selected from the group consisting of styrene resin, polyamide resin, polyolefin resin, and rubber-like elastomer.

2. The polycarbonate resin composition according to Claim 1 wherein the branched polycarbonate is represented by the formula: 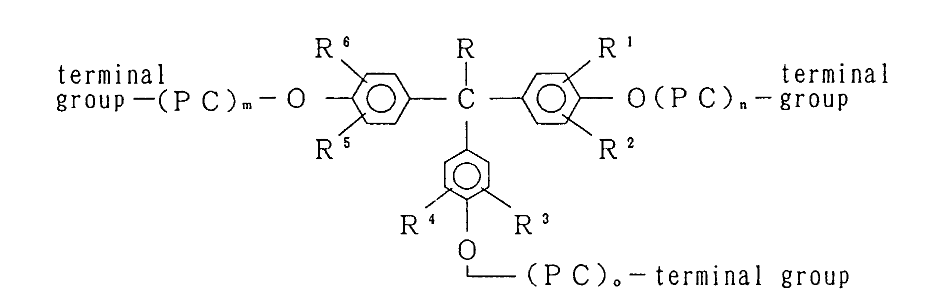 wherein m, n and o are integers, respectively, and PC indicates polycarbonate moiety.

3. The polycarbonate resin composition according to Claim 2 wherein the polycarbonate is made from bisphenol A.

4. The polycarbonate resin composition according to Claim 2 wherein the polycarbonate has the repeating unit represented by the formula:

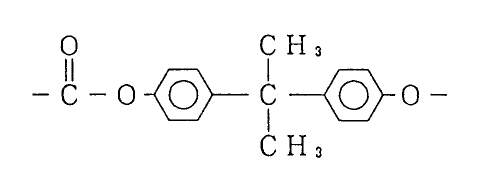

5. The polycarbonate resin composition according to Claim 1 wherein Component (A) is 1 to 99% by weight of branched polycarbonate and Component (B) is 99 to 1% by weight of styrene resin.

6. The polycarbonate resin composition according to Claim 1 wherein Component (A) is 30 to 99% by weight of branched polycarbonate and Component (B) is 70 to 1% by weight of polyamide resin.

7. The polycarbonate resin composition according to Claim 1 wherein Component (A) is 50 to 99% by weight of branched polycarbonate and Component (B) is 50 to 1% by weight of polyolefin.

8. The polycarbonate resin composition according to Claim 1 wherein Component (A) is 40 to 99% by weight of branched polycarbonate and Component (B) is 60 to 1% by weight of rubber-like elastomer.

9. The polycarbonate resin composition according to Claim 1 wherein the branching agent is at least one selected from the group consisting of
1,1,1-tris(4-hydroxyphenyl)methane;
1,1,1-tris(4-hydroxyphenyl)ethane;
1,1,1-tris(4-hydroxyphenyl)propane;
1,1,1-tris(2-methyl-4-hydroxyphenyl)methane;
1,1,1-tris(2-methyl-4-hydroxyphenyl)ethane;
1,1,1-tris(3-methyl-4-hydroxyphenyl)methane;
1,1,1-tris(3-methyl-4-hydroxyphenyl)ethane;
1,1,1-tris(3,5-dimethyl-4-hydroxyphenyl)methane;
1,1,1-tris(3,5-dimethyl-4-hydroxyphenyl)ethane;
1,1,1-tris(3-chloro-4-hydroxyphenyl)methane;
1,1,1-tris(3-chloro-4-hydroxyphenyl)ethane;
1,1,1-tris(3,5-dichloro-4-hydroxyphenyl)methane;
1,1,1-tris(3,5-dichloro-4-hydroxyphenyl)ethane;
1,1,1-tris(3-bromo-4-hydroxyphenyl)methane;
1,1,1-tris(3-bromo-4-hydroxyphenyl)ethane;
1,1,1-tris(3,5-dibromo-4-hydroxyphenyl)methane;
and 1,1,1-tris(3,5-dibromo-4-hydroxyphenyl)ethane.

## Patentansprüche

1. Polycarbonat-Harzzusammensetzung, bestehend im wesentlichen aus (A) 1 bis 99 Gewichts-% eines verzweigten Polycarbonats mit einer verzweigten Kernstruktur, abgeleitet von einem Verzweigungsmittel, dargestellt durch die allgemeine Formel (I): 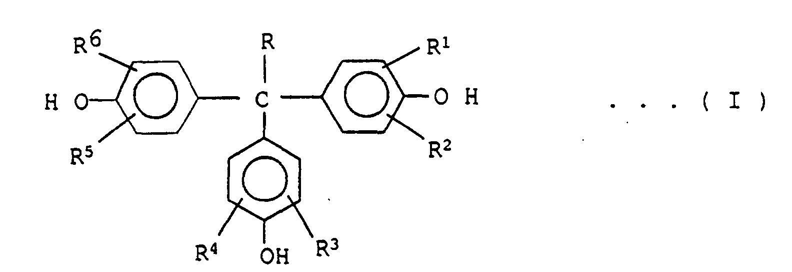 worin R ein Wasserstoffatom oder eine Alkylgruppe mit 1 bis 5 Kohlenstoffatomen ist und R¹ bis R⁶ jeweils Wasserstoffatome, Alkylgruppen mit 1 bis 5 Kohlenstoffatomen oder Halogenatome sind, mit einem viskosimetrischen mittleren Molekulargewicht von 15000 bis 40000 und einem Acetonlöslichen Anteil von nicht mehr als 3,5 Gewichts-% und (B) 99 bis 1 Gewichts-% nur eines Polymeren, ausgewählt aus der aus einem Styrolharz, Polyamidharz, Polyolefinharz und einem kautschukähnlichen Elastomeren bestehenden Gruppe.

2. Polycarbonat-Harzzusammensetzung gemäß Anspruch 1, worin das verzweigte Polycarbonatharz dargestellt wird durch die Formel: 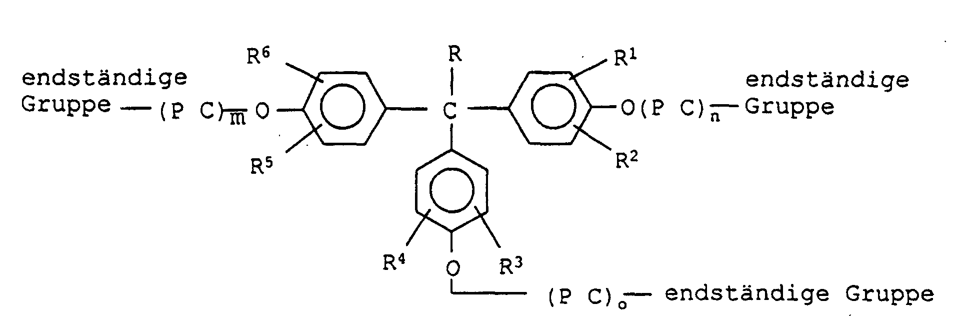 worin m, n und o ganzen Zahlen entsprechen und PC einen Polycarbonatrest angibt.

3. Polycarbonat-Harzzusammensetzung gemäß Anspruch 2, worin das Polycarbonat aus Bisphenol A hergestellt ist.

4. Polycarbonat-Harzzusammensetzung gemäß Anspruch 2, worin das Polycarbonat eine durch die allgemeine Formel dargestellte, wiederkehrende Einheit aufweist:

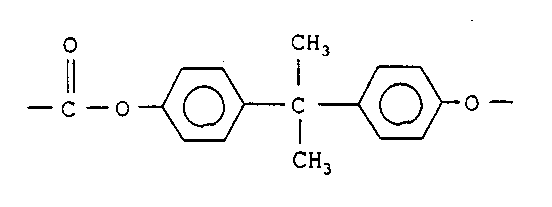

5. Polycarbonat-Harzzusammensetzung gemäß Anspruch 1, worin Bestandteil (A) 1 bis 99 Gewichts-% verzweigtes Polycarbonat und Bestandteil (B) 99 bis 1 Gewichts-% Styrolharz sind.

6. Polycarbonat-Harzzusammensetzung gemäß Anspruch 1, worin Bestandteil (A) 30 bis 99 Gewichts-% verzweigtes Polycarbonat und Bestandteil (B) 70 bis 1 Gewichts-% Polyamidharz sind.

7. Polycarbonat-Harzzusammensetzung gemäß Anspruch 1, worin Bestandteil (A) 50 bis 99 Gewichts-% verzweigtes Polycarbonat und Bestandteil (B) 50 bis 1 Gewichts-% Polyolefin sind.

8. Polycarbonat-Harzzusammensetzung gemäß Anspruch 1, worin Bestandteil (A) 40 bis 99 Gewichts-% verzweigtes Polycarbonat und Bestandteil (B) 60 bis 1 Gewichts-% kautschukähnliches Elastomer sind.

9. Polycarbonat-Harzzusammensetzung gemäß Anspruch 1, worin das Verzweigungsmittel mindestens ein aus der aus
1,1,1-tris(4-Hydroxyphenyl)methan,
1,1,1-tris(4-Hydroxyphenyl)ethan,
1,1,1-tris(4-Hydroxyphenyl)propan,
1,1,1-tris(2-Methyl-4-hydroxyphenyl)methan,
1,1,1-tris(2-Methyl-4-hydroxyphenyl)ethan,
1,1,1-tris(3-Methyl-4-hydroxyphenyl)methan,
1,1,1-tris(3-Methyl-4-hydroxyphenyl)ethan,
1,1,1-tris(3,5-Dimethyl-4-hydroxyphenyl)methan,
1,1,1-tris(3,5-Dimethyl-4-hydroxyphenyl)ethan,
1,1,1-tris(3-Chlor-4-hydroxyphenyl)methan,
1,1,1-tris(3-Chlor-4-hydroxyphenyl)ethan,
1,1,1-tris(3,5-Dichlor-4-hydroxyphenyl)methan,
1,1,1-tris(3,5-Dichlor-4-hydroxyphenyl)ethan,
1,1,1-tris(3-Brom-4-hydroxyphenyl)methan,
1,1,1-tris(3-Brom-4-hydroxyphenyl)ethan,
1,1,1-tris(3,5-Dibrom-4-hydroxyphenyl)methan,
und 1,1,1-tris(3,5-Dibrom-4-hydroxyphenyl)ethan
bestehenden Gruppe ausgewähltes Verzweigungsmittel ist.

## Revendications

1. Composition de résine de polycarbonate constituée essentiellement par
(A) à concurrence de 1 à 99 % en poids, un polycarbonate ramifié dont la structure de noyau ramifiée dérive d'un agent de ramification répondant à la formule générale (I): 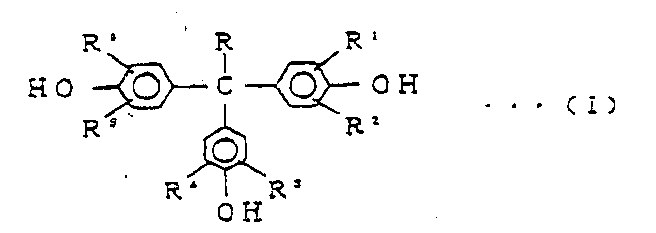 dans laquelle R représente un atome d'hydrogène ou un groupe alkyle contenant de 1 à 5 atomes de carbone, et R¹ à R⁶ représentent des atomes d'hydrogène, des groupes alkyle contenant de 1 à 5 atomes de carbone ou des atomes d'halogène, respectivement,
un poids moléculaire moyen à l'état visqueux de 15.000 à 40.000, et une teneur en substances solubles dans de l'acétone qui n'est pas supérieure à 3,5 % en poids, et
(B) à concurrence de 99 à 1 % en poids, un polymère choisi parmi le groupe constitué par une résine de styrène, une résine de polyamide, une résine de polyoléfine et un élastomère analogue à du caoutchouc.

2. Composition de résine de polycarbonate selon la revendication 1, dans laquelle le polycarbonate ramifié répond à la formule 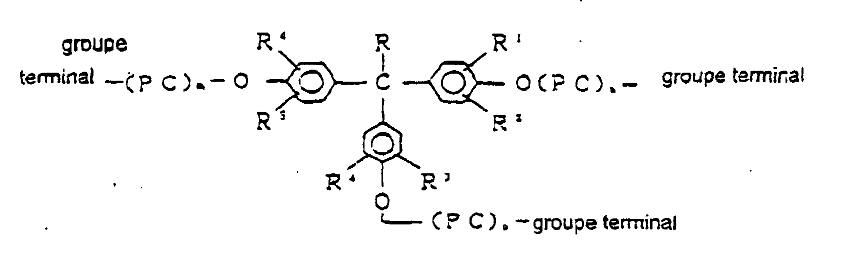 dans laquelle m, n et o sont des entiers, respectivement, et PC désigne une fraction de polycarbonate.

3. Composition de résine de polycarbonate selon la revendication 2, dans laquelle le polycarbonate est préparé à partir de Bisphénol A.

4. Composition de résine de polycarbonate selon la revendication 2, dans laquelle le polycarbonate possède une unité structurale répondant à la formule :

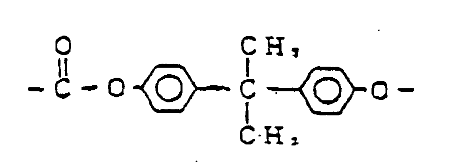

5. Composition de résine de polycarbonate selon la revendication 1, dans laquelle le composant (A) représente, à concurrence de 1 à 99 % en poids, un polycarbonate ramifié et le composant (B) représente, à concurrence de 99 à 1 % en poids, une résine de styrène.

6. Composition de résine de polycarbonate selon la revendication 1, dans laquelle le composant (A) représente, à concurrence de 30 à 99 % en poids, un polycarbonate ramifié et le composant (B) représente, à concurrence de 70 à 1 % en poids, une résine de polyamide.

7. Composition de résine de polycarbonate selon la revendication 1, dans laquelle le composant (A) représente, à concurrence de 50 à 99 % en poids, un polycarbonate ramifié et le composant (B) représente, à concurrence de 50 à 1 % en poids, une polyoléfine.

8. Composition de résine de polycarbonate selon la revendication 1, dans laquelle le composant (A) représente, à concurrence de 40 à 99 % en poids, un polycarbonate ramifié et le composant (B) représente, à concurrence de 60 à 1 % en poids, un élastomère analogue à du caoutchouc.

9. Composition de résine de polycarbonate selon la revendication 1, dans laquelle l'agent de ramification représenta au moins un membre choisi parmi le groupe constitué par
le 1,1,1-tris(4-hydroxyphényl)méthane;
le 1,1,1-tris(4-hydroxyphényl)éthane;
le 1,1,1-tris(4-hydroxyphényl)propane;
le 1,1,1-tris(2-méthyl-4-hydroxyphényl)méthane;
le 1,1,1-tris(2-méthyl-4-hydroxyphényl)éthane;
le 1,1,1-tris(3-méthyl-4-hydroxyphényl)méthane;
le 1,1,1-tris(3-méthyl-4-hydroxyphényl)éthane;
le 1,1,1-tris(3,5-diméthyl-4-hydroxyphényl)méthane;
le 1,1,1-tris(3,5-diméthyl-4-hydroxyphényl)éthane;
le 1,1,1-tris(3-chloro-4-hydroxyphényl)méthane;
le 1,1,1-tris(3-chloro-4-hydroxyphényl)éthane;
le 1,1,1-tris(3,5-dichloro-4-hydroxyphényl)méthane ;
le 1,1,1-tris(3,5-dichloro-4-hydroxyphényl)éthane;
le 1,1,1-tris(3-brome-4-hydroxyphényl)méthane;
le 1,1,1-tris(3-bromo-4-hydroxyphényl)éthane;
le 1,1,1-tris(3,5-dibromo-4-hydroxyphényl)méthane; et
le 1,1,1-tris(3,5-dibromo-4-hydroxyphényl)éthane.
